# EUROPEAN PATENT APPLICATION

(11) **EP 2 255 623 A1**
(43) Date of publication of application: **01.12.2010**
(21) Application number: 09007001.2
(22) Date of filing: 26.05.2009
(51) Int. Cl.: A01N 43/08, A01N 37/42

(54) **Plant nutriments**

(71) Applicant: Wagner-Solbach, Volker, 85560 Ebersberg (DE); Rasthofer, Lydia, 81673 München (DE)
(72) Inventor: Wagner-Solbach, Volker, 85560 Ebersberg (DE); Rasthofer, Lydia, 81673 München (DE)
(74) Representative: Vossius & Partner

(57) **Abstract**

The present invention relates to the use of a composition comprising at least one compound of formula (I) as a plant nutriment. The present invention furthermore relates to a composition comprising the compound of formula (I) and at least one member selected from vitamins, minerals, micronutrients, sulphur- or selenium donors and optionally at least one acid and/or salt selected from a compound of formula (II), hydroxyl-dicarboxylic acids and salts thereof, lactic acid and salts thereof, acetyl-coenzyme A, and mixtures of two or more thereof.

## Description

The present invention relates to the use of a composition comprising at least one compound having a carbonyl group adjacent to an electron rich group with at least one double bond in α-position to the carbonyl carbon atom as a plant nutriment. The present invention furthermore relates to a composition comprising such a compound and at least one member selected from vitamins, minerals, micronutrients, sulphur- or selenium donors and optionally at least one acid and/or salt selected from α-ketoacids of formula (II), hydroxy-dicarboxylic acids, lactic acids and salts thereof, and acetyl-coenzyme A.

In this specification, a number of documents including patent applications and manufacturer's manuals are cited. The disclosure of these documents, while not considered relevant for the patentability of this invention, is herewith incorporated by reference in its entirety. More specifically, all referenced documents are incorporated by reference to the same extent as if each individual document was specifically and individually indicated to be incorporated by reference.

Man-controlled plant growth and durability is usually promoted by the application of nutrient or nutriment compositions such as commercial fertilizer compositions. Most of these compositions contain water-dispersible or water-soluble materials which can be assimilated by plants.

Fertilizers are usually applied either through the soil, for uptake by plant roots, or by foliar feeding, for uptake through leaves. Fertilizers in use in our days are organic (in this case also called manure) or inorganic. They can be naturally occurring compounds such as peat or mineral deposits (e. g. found in Chilean sodium nitrate, mined rock phosphate or limestone as a calcium source), or manufactured through natural processes (such as composting) or chemical processes (such as the Haber Bosch process). These compositions can improve the health and appearance of plants as they provide different essential nutrients that typically promote plant growth.

Fertilizers typically provide, in varying proportions, the three major plant (macro-) nutrients (nitrogen, phosphorus, potassium: N-P-K), the secondary plant nutrients (calcium, sulfur, magnesium) and sometimes trace elements (or micronutrients) with a role in plant nutrition: boron, chlorine, manganese, iron, zinc, copper, molybdenum and optionally selenium.

Though nitrogen is occurring in high concentrations in the atmosphere, relatively few plants engage in nitrogen fixation. Most plants thus require nitrogen compounds to be present in the soil in which they grow. The secondary macronutrients are required in roughly similar quantities than the primary macronutrients but they are often provided in the form of liming or manuring.

Macronutrient fertilizers predominantly contain nitrogen, phosphorus, and potassium and are named or labeled according to the content of these three elements. If nitrogen is the main element, they are often described as nitrogen fertilizers. Nitrogen- based fertilizers are most commonly used to treat fields used for growing maize, followed by barley, sorghum, rapeseed, soybean and sunflower. Study results have shown that using nitrogen fertilizer on off-season cover crops can not only increase the biomass of these crops, but can also have a beneficial effect on the nitrogen levels in the soil for the cash crop planted during the summer season. In general, agricultural fertilizers contain only one or two macronutrients. Agricultural fertilizers are intended to be applied infrequently and normally prior to or alongside seeding. Examples of agricultural fertilizers are granular triple superphosphate, potassium chloride, urea, and anhydrous ammonia.

Horticultural or specialty fertilizers, e. g. for indoor plants, are formulated from many of the same compounds and some others to produce well-balanced fertilizers that also contain micronutrients. Some materials, such as ammonium nitrate, are used minimally in large scale production farming. Horticultural fertilizers may be water-soluble (instant release) or relatively insoluble (controlled release).

Inorganic fertilizers enhance plant growth, the accumulation of organic matter and the biological activity of the soil, preventing overgrazing and soil erosion. Inorganic fertilizers sometimes do not replace all necessary trace mineral elements in the soil which become gradually depleted by crops grown there. On the other hand, initial deficiencies of zinc, copper, manganese, iron and molybdenum in the soil limit the growth of crops and pastures. This has been shown in studies which have shown a marked fall (up to 75%) in the quantities of such minerals present in fruit and vegetables.

Naturally occurring organic fertilizers include manure, slurry, worm castings, peat, seaweed, sewage and guano. Green manure crops are also grown to add nutrients to the soil. Manufactured organic fertilizers include compost, bloodmeal, bone meal and seaweed extracts. Other examples are natural enzyme digested proteins, fish meal, and feather meal. The decomposing crop residue from prior years is another source of fertility.

There are, however, concerns about using certain fertilizers. For example, there is a constant danger of arsenic, cadmium and uranium accumulating in fields treated with phosphate fertilizers. The phosphate minerals contain trace amounts of these elements and if no cleaning step is applied after mining, the continuous use of phosphate fertilizers leads towards an accumulation of these elements in the soil. Phosphate fertilizers also replace inorganic arsenic naturally found in the soil, displacing the heavy metal and causing accumulation in runoff. Eventually these heavy metals can build up to unacceptable levels and get into the produce. Another problem with inorganic fertilizers is that they are presently produced in ways which cannot be continued indefinitely. Potassium and phosphorus come from mines (or from saline lakes such as the Dead Sea in the case of potassium fertilizers) and resources are limited. Nitrogen is unlimited, but nitrogen fertilizers are presently made using fossil fuels such as natural gas. Theoretically fertilizers could be made from sea water or atmospheric nitrogen using renewable energy, but doing so would require huge investment and is not competitive with today's unsustainable methods.

Plants are subject to many threats such as lice or other insect pests. Fungi attack crops such as maize, wheat and barley. Weeds compete with crops for light, water and nutrients. Further stress factors for plants are massive light, water shortage, heat, cold or frost or excess of nitrogen compounds e.g. from common fertilizers like e.g. ammonia leading mostly to oxidative or nitrosative stress or excessive rainfall or low oxygen levels up to Anoxia (D. Heß, Pflanzenphysiologie, 11th edition 2008, UTB, p. 324) caused e.g. by water flooding the plants. These stress factors cannot be attenuated by common fertilizers or are even promoted by them. Therefore, it would be desirable to provide additional compounds or compositions which support plants in battling the negative effects of such stress. At the same time or alternatively it would be desirable to be able to reduce the amount of fertilizer applied to plants as well as its residence time especially in the beginning and end of the growing period. Preferably, such compounds or compositions are easy to provide.

These needs are addressed by the present invention.

Accordingly, the present invention relates to the use of a composition comprising at least one compound of formula (I) 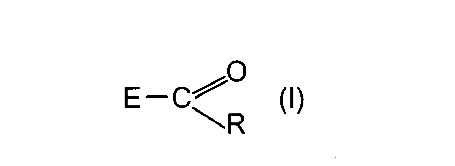 wherein
either
R is selected from hydrogen, and C₁-C₄alkyl; and
E is an electron rich group with at least one double bond in α-position to the carbonyl carbon atom of formula (I) and is selected from 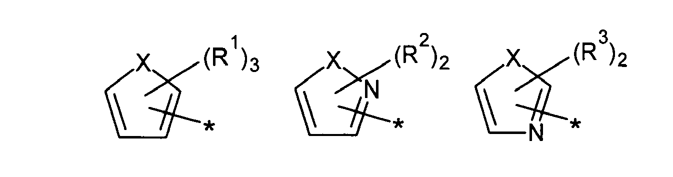 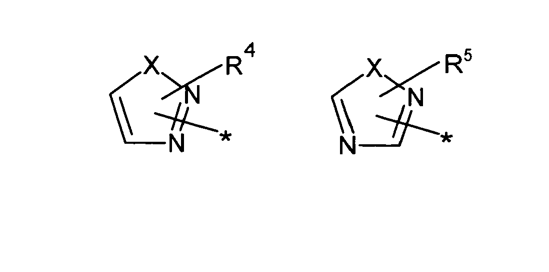 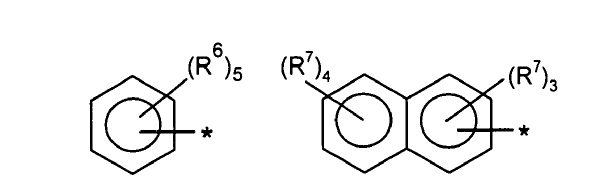 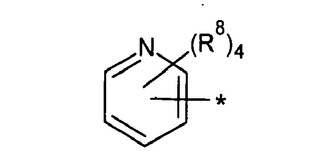 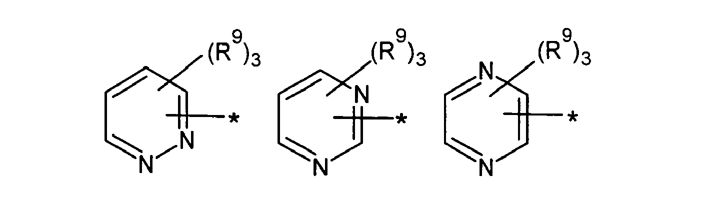 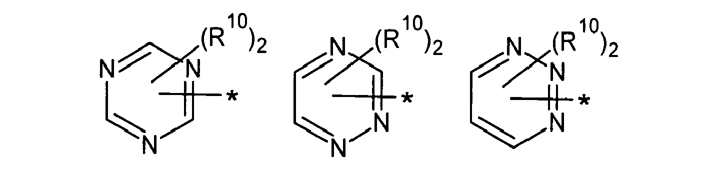 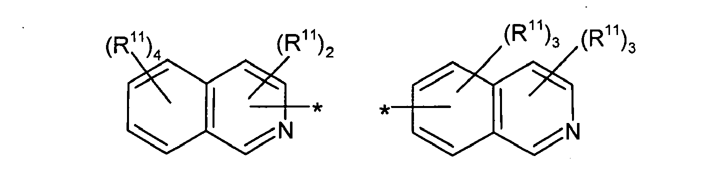 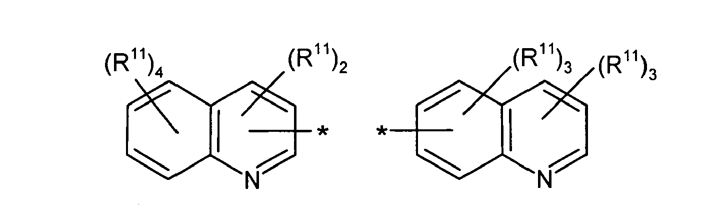 and 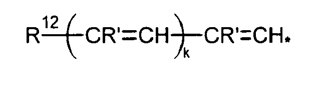 wherein
* denotes the binding site of the carbonyl carbon atom of formula (I); k is an integer of 0 to 6;
each R' is independently selected from H, OH, CH₃ and CH₂OH;
X is independently selected from O, S and NH;
each of R¹, R² R³, R⁴, R⁵, R⁶, R⁷, R⁸, R⁹, R¹⁰ and R¹¹ is independently selected from hydrogen; C₁-C₄alkyl optionally substituted with one or more substituents independently selected from OH, COOH, CHO; C₁-C₄alkoxy; OH; SH; SeH; halogen; and
R¹² is selected from hydrogen, C₁-C₂₂alkyl, OH, SH, SeH, C₁-C₂₂alkoxy, C₃-C₆cycloalkyl and C₃-C₆cycloalkenyl, wherein each alkyl, alkoxy, cycloalkyl and cycloalkenyl group may optionally be substituted with one or more substituents selected from -CH₃, -CH₂OH, OH and COOH;
or
E together with R forms a ring where the carbonyl carbon atom of formula (I) is an integral part of the ring and where there are at least two conjugated double bonds in α-position to the carbonyl carbon atom, resulting in compounds selected from those of the following structures (Ia), (Ib), (Ic), (Id) and (Ie): 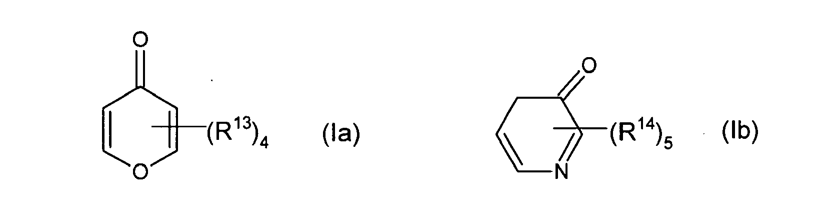 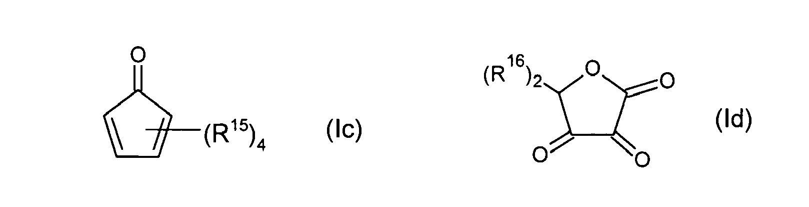 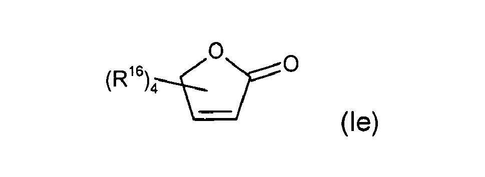 wherein each R¹³, R¹⁴, R¹⁵ and R¹⁶ is independently selected from hydrogen; OH; SH; SeH; C₁-C₁₂alkyl optionally substituted with one or more substituents selected from OH, SH and SeH; and C₁-C₁₂alkoxy optionally substituted with one or more substituents selected from OH, SH, and SeH; as a plant nutriment.

The term "composition", as used in accordance with the present invention, relates to a composition which comprises at least one of the recited compounds. The composition may be in solid or liquid form or may be an aerosol.

The composition can be applied in any of these forms to enable plants to take it up. Exemplary modes of application comprise delivery to the surrounding atmosphere (e. g. as an aerosol), to the roots (e. g. using granules or irrigation water) or spraying of the leafs or blossoms. In case the composition is applied in solid form, its consistence can be modified to enable for immediate or sustained release of the composition.

The liquid form can for instance be a solution, emulsion, or dispersion. Liquid compositions further comprise a liquid medium which may be selected from protic and aprotic solvents like water, aliphatic hydrocarbons, aromatic diols and polyols, methanol, ethanol, glycols, polyglycols and isopropanols and mixtures thereof; preferably the liquid medium is an aqueous medium selected from water and mixtures of water and one or more water soluble organic solvents selected from solvents containing hydroxylgroups. Particularly preferred is water.

If the composition to be used is in liquid form the amount of the compound of formula (I) is preferably in the range of 0.1 µg/l to 150 g/I, more preferably from 1 µg/l to 100 g/I, more preferably from 1 mg/l to 50 g/I, most preferably from 0,1 g/l to 25 g/I. If a mixture of two or more compounds of formula (I) is present, the above ranges refer to the total amount thereof. If the liquid composition additionally comprises an acid selected from α-ketoacids of formula (II) and hydroxy-dicarboxylic acids as described further below, the amount of the acid is preferably in the range of 0,1 µg/l to 180 g/I, more preferably of 1 mg/l to 150 g/I, more preferably of 0,1 g/I to 100 g/I and most preferably from 0,1 g/l to 50 g/I. If a mixture of two or more acids is present, the above ranges refer to the total amount thereof.

The specific concentrations and amounts of the composition to be applied to a plant in accordance with the invention highly depend on the plant treated and may vary accordingly. For example, in the case of droughts which will be described in detail below, plants which are used to a decreased water supply such as succulents will generally need a lower amount of the composition than plants requiring the regular application of high amounts of water such as rice. The same holds true for plants which are more or less adapted to a high solar irradiation or an excess of water as described below. In addition, treatment during the last period before harvest needs very specific treatment schemes depending on the type of plant such as crop and optionally the level of e.g. oxidative and nitrosative stress to be minimized. The skilled person is able to readily determine an adequate concentration or amount of the composition to be applied based on his knowledge about the needs of the specific plant.

It is possible that the liquid composition is prepared and stored in a more concentrated form and is diluted prior to use with a suitable solvent like water to suitable concentrations, e.g., the above-mentioned concentrations.

The solid form can, for instance, be a powder, granules or pellets or coatings such as encapsulated seeds.

A solid composition can be prepared by conventional methods like (1) mixing the solid ingredients in a conventional mixing apparatus and optionally ball-mill or pulverize the mixture, or (2) granulating a mixture of the solid ingredients by conventional methods and drying if necessary or coating to given or prepared surfaces.

It is also possible to mix a solid composition with a solvent like water (and thereby obtain a solution, emulsion or dispersion) prior to use and then apply the liquid form.

Liquid forms of the composition used in accordance with the invention can be treated e.g. by vacuum drying to obtain higher concentrated compositions up to solid forms.

The composition may, optionally, comprise further molecules capable of altering the characteristics of the compounds according to the invention thereby, for example, if applicable, stabilizing, modulating (if modulation enhances efficacy) and/or activating (e. g. if the compound(s) are provided in an inactive or activatable form) their function. Preservatives and other additives may also be present such as, for example, antimicrobials, antioxidants, chelating agents, surfactants/dispersants, colorants, flavour materials, sweeteners, acidifiers, driving means, emulsifying agents and inert gases (e. g. argon or nitrogen) and the like.

The compounds comprised in the composition used in accordance with the invention may be recovered e.g. through extraction from natural or artificial products or mixtures thereof (e. g. antimicrobials or surplus materials or even waste) or chemically synthesized by methods well known in the art.

Unless otherwise defined in the following the term "alkyl" refers to a straight-chain or branched saturated hydrocarbon group, the term "alkoxy" refers to a group -OR wherein R is an alkyl group as defined above, the term "cycloalkyl" refers to a saturated carbocyclic group, the term "cycloalkenyl" refers to a carbocyclic group with one C-C double bond in the ring, and the term "halogen" refers to fluorine, chlorine, bromine and iodine.

The compositions to be used according to the present invention comprise at least one compound characterized by a carbonyl group and at least one double bond in α-position to the carbonyl carbon atom, i.e. compounds represented by formula (I) as has been defined above.

The at least one double bond in α-position to the carbonyl carbon atom is preferably selected from C-C double bonds, C-N double bonds, C-O double bonds and combinations thereof, more preferably C-C double bonds.

If R in formula (I) does not form a ring together with E it is preferably selected from hydrogen, methyl and ethyl; more preferably it is hydrogen.

If E in formula (I) does not form a ring together with R it is selected from 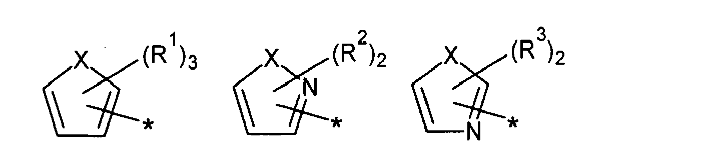 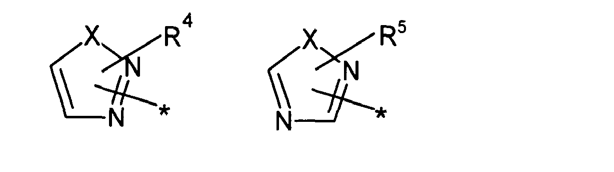 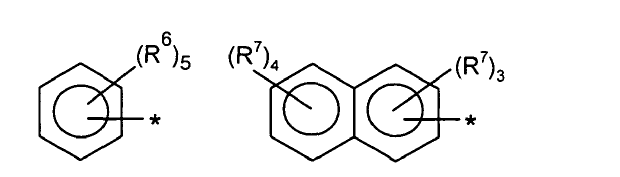 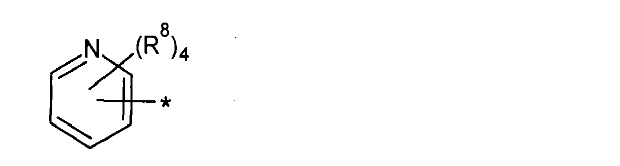 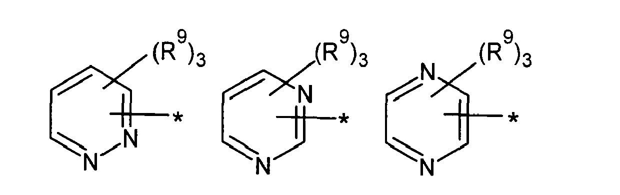 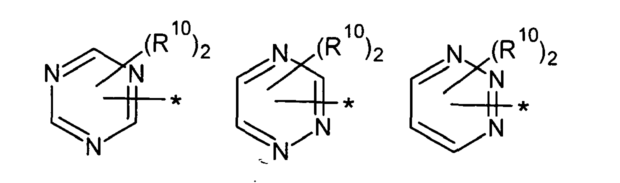 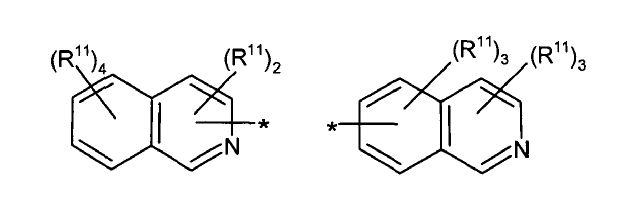 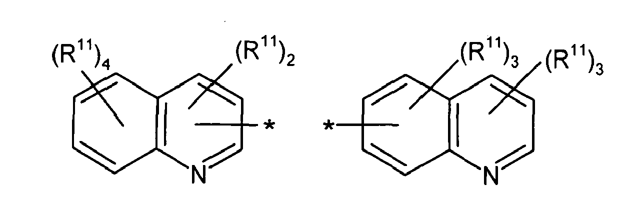 and

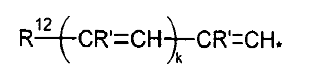

In those structures X is preferably O or S, more preferably O.

Preferred groups for E are 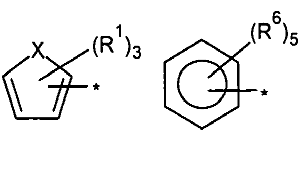 and 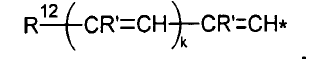 more preferred are 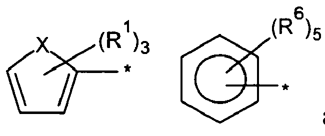 and

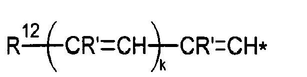

Preferably each R¹, R², R³, R⁴, R⁵, R⁸, R⁹, R¹⁰ and R¹¹ is independently selected from hydrogen, methyl ethyl, hydroxymethyl, hydroxyethyl, methoxy, ethoxy, OH and SH, more preferably hydrogen, methyl, ethyl, hydroxymethyl, hydroxyethyl and OH, and still more preferably hydrogen, OH, hydroxymethyl, methoxy, methyl, and most preferred hydrogen and hydroxymethyl.

Preferably each R⁶ and R⁷ is independently selected from hydrogen, methyl, ethyl, methoxy, ethoxy, OH and SH, more preferably hydrogen, OH, methoxy and ethoxy.

R¹² is preferably selected from hydrogen; C₁-C₈alkyl, C₁-C₈alkoxy, each optionally substituted with one or more OH; OH; SH; and C₃-C₆cycloalkenyl optionally substituted with one or more groups selected from CH₃ and OH; more preferably R¹² is selected from hydrogen, methyl, ethyl, hydroxymethyl, hydroxyethyl methoxy, ethoxy, OH, SH and C₃-C₆cycloalkenyl optionally substituted with one or more groups selected from CH₃ and OH, most preferably hydrogen, methyl and C₃-C₆cycloalkenyl optionally substituted with one or more CH₃ groups.

Preferably each R' is independently selected from hydrogen, OH and CH₃, more preferably hydrogen and CH₃.

Preferably, k is an integer from 0 to 4, more preferably 0 to 3.

If E together with R forms a ring the compound of formula (I) is represented by one of the following structures (Ia) to (Ie)

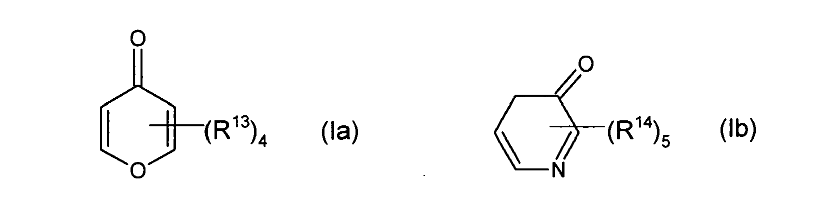

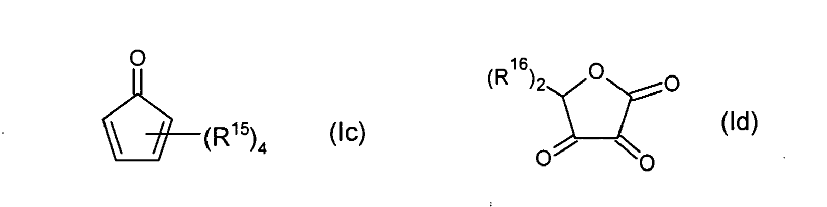

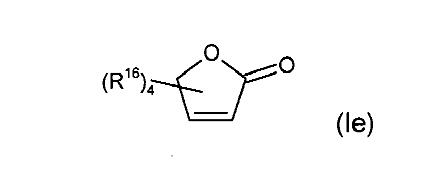

From these structures (Ia), (Ib) and (Id) are preferred.

Preferably each R¹³ is independently selected from hydrogen, OH, SH, C₁₋₄alkyl, hydroxy substituted C₁₋₄alkyl, more preferably hydrogen, OH, methyl and ethyl.

Preferably each R¹⁴ is independently selected from hydrogen, OH, C₁₋₄alkoxy, C₁₋₄alkyl and C₁₋₄alkyl substituted with OH, more preferably hydrogen, methyl, ethyl, hydroxymethyl and hydroxyethyl.

Preferably each R¹⁵ is independently selected from hydrogen, OH, SH, C₁₋₄alkyl, hydroxy substituted C₁₋₄alkyl, more preferably hydrogen.

Preferably each R¹⁶ is independently selected from hydrogen, OH, C₁₋₄alkyl and C₁₋₄alkyl substituted with one or two OH, more preferably hydrogen, OH and C₁₋₃alkyl substituted with one or two OH, and most preferably hydrogen, hydroxymethyl, hydroxyethyl and dihydroxyethyl.

Preferably the compound of formula (I) is selected from compounds of the following formulae: 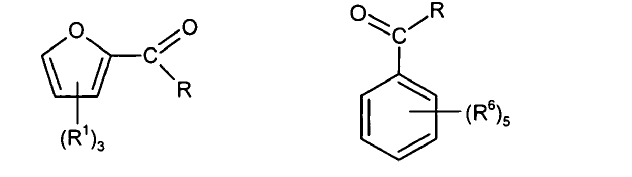 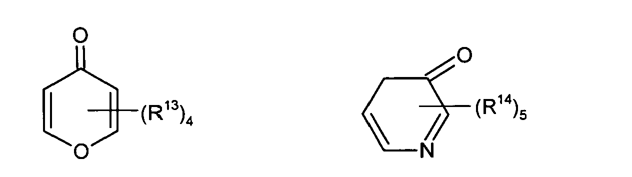 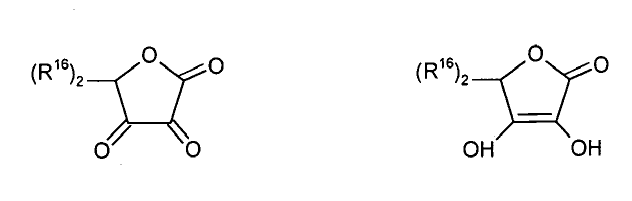 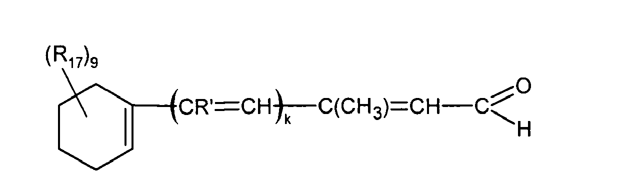 wherein
R, R¹, R⁶, R¹³, R¹⁴ R¹⁶, R¹⁷ and R^{'} are as defined above, and
k is 0 or an integer from 1 to 3.

Especially preferred compounds of formula (I) are 5-hydroxymethyl-furfural, maltol, 4-hydroxy-3-methoxy-benzaldehyd (vanillin), dehydroascorbic acid, cis- or trans-retinal (particularly 11-cis-retinal and all-trans-retinal) and mixtures of two or more of the foregoing; the most preferred compound is 5-hydroxymethyl-furfural.

It is intended that formula (I) encompasses all stereoisomers like cis- and trans-isomers, diastereomers where possible, enantiomers where possible, mixtures thereof and racemates.

Furthermore, all tautomers obtained by keto-enol-tautomerism are intended to be encompassed by formula (I). In other words: Compounds with a hydroxy group bonded to an sp² carbon atom under certain conditions may form a keto group by keto-enol tautomerism 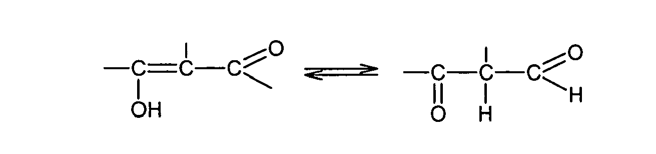 and it is intended that both tautomers fall within formula (I) as depending on the conditions the keto-tautomer can transform to the enol tautomer which then has a double bond in α-position to the carbonyl group and as such falls under formula (I) above.

In connection with the present invention, the term "plant" refers to living organisms belonging to the kingdom Plantae (green plants) as well as to red algae, brown algae and fungi. They include organisms such as trees, herbs, bushes, grasses, vines, ferns, with or without flowers, mosses, lichens (composite organisms consisting of a symbiotic association of a fungus (the mycobiont) with a photosynthetic partner (the photobiont or phycobiont), usually either a green alga or cyanobacterium) and green algae. Exemplary plants or classes of plants are indoor plants, parasitic plants, agricultural crops, water plants, plants of tropical rainforrests, orchids, or herbal plants. Depending on the species and stage of development, plants can be haploidic, diploidic or polyploidic. In connection with the present invention, plants also include genetically manipulated plants.

About 350,000 species of plants, defined as e. g. seed plants, bryophytes, ferns and fern allies, are estimated to exist currently. Green plants, also called metaphytes or *viridiplantae,* obtain most of their energy via photosynthesis and comprise Charophyta (i.e., desmids and stoneworts) and Chlorophyta (i.e., green algae such as sea lettuce). Green plants and Rhodophyta (red algae) and Glaucophyta (simple glaucophyte algae) are also calted Archaeplastida, all plants according to the present invention. Accordingly, Archaeplastida comprise most of the eukaryotes that acquired their chloroplasts directly by engulfing cyanobacteria.

With a few exceptions among the green algae, all plant forms have cell walls containing cellulose, have chloroplasts containing chlorophylls a and b, and store starch. They undergo closed mitosis without centrioles, and typically have mitochondria with flat cristae.

In the context of the present invention, the term "plant" also encompasses fungi, preferably edible mushrooms, which more preferably can be cultured. Examples of edible mushrooms are white mushroom, chanterelle, boletus, oyster mushroom and morel.

Plants can be multicellular organisms such as trees or herbs, or unicellular such as certain algae.

On preferred kind of plant is algae. Algae are more and more attracting interest as food or as source for recombinantly produced food compounds or bio-fuels. Growing algae is usually effected by fermentation. Exemplary algae used for food supply are those of the genus Spirulina, Chlorella and Dunaliella.

Preferred plants include crops and indoor plants.

A crop or agricultural crop is any plant that is grown in significant quantities to be harvested as food, livestock fodder, or for any other economic purpose. Crops comprise grain such as rye, barley or wheat, maize, rice, sorghum, oat, rapeseed, vegetables and fruits. Common fruits and vegetables include those described further below and others such as tomato, asparagus, succory and fennel.

It is envisaged that crops can be treated with the composition in accordance with the invention both if they are grown on conventional fields and in areas such as forests, in particular rain forests (as is the case for e. g. rubber trees and coconut palms).

An indoor plant (or houseplant) is a plant that is grown indoors completely or partly after seeded, or grown up outside e.g. in tropical or subtropical regions before grown indoors, or used indoors (like cutting plants, e. g. cutting flowers) in places such as residences and offices. Indoor plants are commonly grown for decorative purposes and health reasons such as indoor air purification. Plants used in this fashion are most commonly, though not always, tropical or semi-tropical and/or succulent. Examples of tropical and subtropical indoor plants are *Aglaonema* (Chinese Evergreen), *Amaryllis, Aphelandra squarrosa* (Zebra Plant), *Araucaria heterophylla* (Norfolk Island Pine), *Asparagus densiflorus* (Asparagus Fern), *Begonia* species and cultivars, *Bromeliaceae* (Bromeliads), *Chamaedorea elegans* (Parlor Palm), *Chlorophytum comosum* (Spider Plant), *Citrus, Dracaena, Dieffenbachia* (Dumbcane), *Epipremnum aureum* (Golden Pothos), *Ficus benjamina* (Weeping Fig), *Ficus elastica* (Rubber Plant), *Hippeastrum, Mimosa pudica* (Sensitive Plant), *Nephrolepis exaltata cv. Bostoniensis* (Boston Fern), *Orchidaceae* (orchids), *Cattleya* and intergeneric hybrids thereof (e.g. Brassolaeliocattleya, Sophrolaeliocattleya), *Cymbidium, Dendrobium, Miltoniopsis, Oncidium, Paphiopedilum, Phalaenopsis, Peperomia* species, *Philodendron* species, *Maranta* (The Prayer Plants), *Saintpaulia* (African violet), *Sansevieria trifasciata* (Mother-inlaw's tongue), *Scheffiera arboricola* (Umbrella Plant), *Sinningia speciosa* (Gloxinia), *Spathiphyllum* (Peace Lily), *Stephanotis floribunda* (Madagascar Jasmine) and *Tradescantia zebrina* (Purple Wandering Jew). Examples of succulents include *Aloe vera,* Cactaceae (Cacti), *Epiphyllum* (Orchid Cacti), *Mammillaria, Opuntia* (Large genus that includes the Prickly Pear), *Zygocactus* (Christmas Cactus) and *Crassula ovata* (Jade Plant). Other common indoor plants are *Crocus, Hyacinthus* (Hyacinth), *Narcissus (genus)* (Narcissus or Daffodil), Hedera *helix* (English Ivy) and *Saxifraga stolonifera* (Strawberry Begonia).

The present inventors have surprisingly found that the compound of formula (I) when applied as a plant nutriment has several advantageous effects on plants. As shown in the appended examples, compounds of formula (I), like 5-hydroxymethylfurfural, are able to promote the growth of plants, to improve their fitness and resistance to stress caused e. g. by reactive oxygen or nitrogen species, droughts or heat, or massive light, water shortage, heat, cold or frost, or excess of nitrogen compounds e.g. from common fertilizers like e.g. ammonia leading mostly to oxidative or nitrosative stress or excessive rainfall or low oxygen levels up to anoxia (D. Heß, Pflanzenphysiologie, 11th edition 2008, UTB, p. 324) caused e.g. by water flooding the plants. In particular and without wishing to be bound by any scientific theory, the present inventors believe that the compound of formula (I) exerts its activities by, independently or in combination, increasing nitrogen assimilation sometimes or mostly in connection with bacteria cohabitation, increasing resistance to high concentrations of nitrogen compounds such as nitric oxide from the surrounding atmosphere, arising from combustion processes in the combustion engines of cars, industrial plants and heating systems based on combustion, nitrates and nitrites from fertilizers and from ground water or liquids from watering plants in nurseries. Plants, e.g. cutting flowers, are in the position to more rapidly recover from oxidative stress and other damage, e. g. after long transports with or without anoxia (e. g. in airplane transports).

It is further believed that the compound according to the invention increases the capacities of the redox systems of plant cells. These advantageous properties result in a higher resistance to pests in the ability to take up increased amounts of ammonia and primary amines from the environment and to fix them. The chemical basis of these effects is believed to be an improved metabolism in the urea cycle and/or the formation of azomethins of the compounds according to the invention.

Optionally, the compositions to be used according to the present invention also comprise at least one acid and/or salt selected from (i) α-ketoacids represented by the following formula (II) 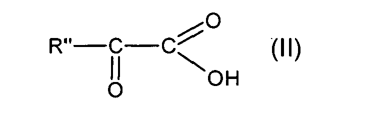 wherein R" is selected from hydrogen, C₁-C₈alkyl, and -(CH₂)ₓ-COOH, and x is an integer from 1 to 6, and salts thereof;
(ii) hydroxy-dicarboxylic acids, and salts thereof;
(iii) lactic acid and salts thereof;
(iv) acetyl-coenzyme A; and
(v) mixtures of two or more thereof.

Preferably R" in formula (II) is selected from, C₁-C₄alkyl, and -(CH₂)ₓ-COOH with x being 1, 2 or 3, more preferably it is C₁-C₂alkyl, or -CH₂-COOH.

Preferred acids are α-ketoacids of formula (II) and hydroxy-dicarboxylic acids; the hydroxy-dicarboxylic acids are preferably represented by the following formula (III) 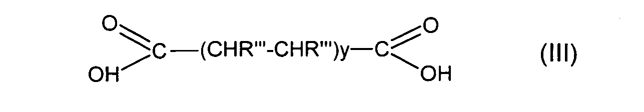 wherein

y is an integer from 1 to 10, preferably 1 to 5, more preferably 1 or 2; and
each R"' is independently selected from hydrogen, OH and C₁-C₄alkyl which can optionally be substituted with OH, with the proviso that the moiety -(CHR"'-CHR"')_{y}- contains at least one OH group; preferably each R"' is independently selected from hydrogen, OH, methyl and ethyl with the proviso that one group R"' is OH.

Especially preferred acids are selected from α-ketoglutaric acid, α-ketopropionic acid, oxaloacetic acid and malic acid (D- and L-form).

Instead of a free acid, a salt thereof can be used, like an alkali metal salt or alkaline-earth metal salt or other metal or metalloid salt; preferred are sodium salts, potassium salts, magnesium salts, iron salts.

The ratio of the compound of formula (I) and the compound of formula (II) comprised in the composition according to the present invention is suitably between 1000000:1 and 1:1000000 preferably between 1000:1 and 1:1000 more preferably between 400:1 and 1:400 and most preferably between 40:1 and 1:40 The ratio may be adapted to specific plants to be treated.

A composition comprising both at least one compound of formula (I) and at least one α-ketoacid and/or hydroxy-dicarboxylic acid and salts thereof and/or lactic acid and salts thereof and/or acetyl-coenzyme A and/or mixtures of two or more thereof exerts especially advantageous properties. It is believed to improve metabolic functions via the transamination function of compounds of α-ketoacids and hydroxy-dicarboxylic acids and the transfer of ammonia to other compounds.

Furthermore, it is believed that reactive oxygen species, e.g. produced under hypoxia, are reduced by the effect of the combination of the compounds according to the invention, in particular, the combination of 5-hydroxymethylfurfural (5-HMF) as singlet oxygen scavenger and α-ketoglutaric acid especially in combination with 5-HMF as peroxonitirite scavenger or by its reaction with hydroxyl radicals to form succinic acid.

5-HMF may react with ammonia/NH₄⁺ ions and primary amines or primary NH₄⁺ ions to form e. g. azomethins (Schiff bases). α-ketoglutaric acid may react with hydroxyl radicals to form succinic acid. The ingredients of the composition comprising at least one compound of formula (I) and at least one of the acid compounds or salts thereof described above may be applied to a plant concurrently or subsequently, depending on the purpose and the needs of the plant.

In a preferred embodiment, said nutriment is for improving resistance to pests and/or floods/excess of water causing hypoxia and/or to drought and/or for enhancing growth.

The term "resistance to pests" in accordance with the present invention relates to the ability of a plant to withstand pests. It is believed that the composition as used in accordance with the invention will lead to an improved resistance of plants to pests which could e. g. be expressed in a resistance to a higher amount or higher concentration of pests of a plant treated in accordance with the invention as compared to a plant not treated in this way.

The term "enhancing growth", in accordance with the invention, denotes the optimization of the yield of plants (and symbiotic systems). This results in the plants looking prettier, healthier, growing more rapidly, in particular in case of decreased photosynthetic performance due to lack of light or damage to the photosynthetic system.

The combination of at least one compound of formula (I) and optionally at least one α-ketoacid and/or hydroxy-dicarboxylic acid in a composition is believed to reduce the effect of pests and pathogens resulting in a possible reduction of pesticides. Furthermore, harmful or toxic substances are decomposed more rapidly resulting in an increased resistance to these substances. The plant roots and bulbs grow stronger since the composition according to the invention may have an influence on the storage of reducing agents such as thiols to be used in growth phases without photosynthesis. Plants and their parts remain fresh for a longer time after harvest if they are treated with the composition of the invention prior to, during or after harvest, the latter especially with regard to cutting flowers. This refers in particular to harvested fruits, vegetables, seeds, seedlings and cut flowers.

The term "droughts", in accordance with the present invention denotes an extended period of time, e. g. several days, weeks, months or even years, with a deficiency in water supply. Droughts can have a substantial impact on the ecosystem and agriculture of affected regions. Although droughts can persist for several years, even a short, intense drought can cause significant damage. Droughts are distinguished by their severity into the three stages meteorological, agricultural and hydrological drought. The second stage, agricultural drought, affects crop production or the ecology of the range. The extent to which plants such as crops are affected depends on the particular plant. This condition can also arise independently from any change in precipitation levels when soil conditions and erosion triggered by poorly planned agricultural endeavors cause a shortfall in water available to the crops.

The term "flood" denotes an overflow or accumulation of an expanse of water that submerges land, whereas the term "excess of water" while including floods generally relates to a greater amount of water being present in an area than necessary. Areas concerned may be as large as a whole region including crop fields or as small as a flower pot.

The term "hypoxia" in accordance with the invention relates to a condition in which the plant body as a whole or a region of the plant body is deprived of adequate oxygen supply. Alternatively or in addition, the term relates to an environmental state where dissolved oxygen (i. e. molecular oxygen dissolved in water) becomes reduced in concentration to a point detrimental to plants. The latter preferentially occurs in aquatic environments such as lakes and oceans but also in areas where crops are grown in an excess of water (such as rice). In accordance with the invention, the term "anoxia" refers to a state of total depletion of oxygen supply and/or dissolved oxygen. In particular in connection of crops grown on fields flooded with water (such as rice), it is envisaged that the composition used according to the invention will reduce the adverse effects of hypoxia or anoxia.

The compound according to the invention is also believed to reduce the need for other fertilizers or even avoid other fertilizers in total, especially if phosphorus and potassium is available in substantial amounts, but not nitrogen. This is based on the theory that the application of the compound of formula (I) results in a better fixation of oxygen or nitrogen contained in air or soil in optimized plant-bacterial symbioses by e.g. enhanced reaction, transportation and therefore minimization of too high concentrations of nitrogen-containing products such as ammonia (which is toxic and decreases the pH value). Compounds of formula (II) sometimes can act similar, which is used in transamination reactions through the alpha-keto-group.

Additional effects of the composition used in accordance with the invention envisaged are an improved resistance to heat and/or solar irradiation.

In another preferred embodiment, the compound of formula (I) reduces oxidative and/or nitrosative stress.

The term "oxidative stress" describes the effects caused by an imbalance between the uptake or production of oxygen and/or reactive oxygen species and/or radicals and the ability of an organism or cell to readily detoxify the reactive products called radicals or reactive oxygen species (Wolin *et al.,* 2002). Radicals are defined chemical species comprising one or more unpaired electrons. They can be formed from neutral molecules by release or uptake of an electron or by hemolytic cleavage of a covalent bond. The toxicity of radicals is based on their high reactivity. Reactive oxygen species are radicals or reactive non-radical compounds that can oxidize biomolecules. The reducing environment maintained within living cells is preserved by enzymes that maintain the reduced state through a constant input of metabolic energy and/or reduction equivalents and/or light in "green" cells with chlorophyll-systems. Disturbances in this normal redox state can cause toxic effects through e.g. the production of peroxides and radicals (the term "radical" corresponds to the formerly used term "free radical") that damage all components of the cell, including proteins, lipids, and DNA.

In chemical terms, oxidative stress denotes the decrease in the reducing capacity of the cellular redox couples, such as glutathione. The effects of oxidative stress depend upon the size of this decrease and results in the cell being able to overcome small perturbations and regain its original state or undergoing cell death by e. g. apoptosis (caused by moderate oxidative stress) or necrosis (severe oxidative stress).

Upon oxidative stress, reactive oxygen species are produced, which include radicals and peroxides. Some of the less reactive of these species (such as the superoxide anion; •O₂-) can be converted by oxidoreduction reactions with transition metals or other redox cycling compounds (including quinones) into more aggressive radical species that can cause extensive cellular damage. The major portion of long term effects is inflicted by damage on nuclear and/or mitochondrial DNA and/or mitochondria. Most of these oxygen-derived species are produced at a low level by normal aerobic metabolism and the damage they cause to cells is constantly repaired. However, under the severe levels of oxidative stress that cause necrosis, the damage causes ATP depletion, preventing controlled apoptotic death and causing the cell to simply fall apart. Reactive oxygen species other than •O₂- are H₂O₂ (hydrogen peroxide), •OH (hydroxyl radical), ROOH (organic hydroperoxide), RO• (alkoxy radicals) and ROO• (peroxy radicals), HOCI and ONOO- (peroxynitrite). Some adverse reactions are in the following described on the example of peroxinitrite (ONOO⁻). ONOO⁻ can severely hamper the activity of proteins by nitrating tryrosin or tryptophane residues (Ischiropoulos *et al.,* 1992; Alvarez *et al.,* 1996; Quijano *et al.,* 2005). Further, it mediates oxidation of methionine residues resulting in the inhibited activation of antioxidative enzymes (MacMillan-Crow *et al.,* 1996; Padmaja *et al.,* 1998; Quijano *et al.,* 2001; Kocis *et al.,* 2002; Kuo *et al.,* 2002). Finally, ONOO⁻ is suggested to play a role in lipid peroxidation and damage of the cellular membrane (O'Donnell und Freeman, 2001).

The term "nitrosative stress" describes the effects occurring in an organism when intermediates are produced from nitrosated thiol, hydroxy and amine groups. Unlike the variety of possible intermediates that could mediate oxidative stress, the primary initiator of nitrosative stress under physiological conditions is N₂O₃. This species is not as potent an oxidant as those that mediate oxidative stress. Rather, its primary reaction is to donate an equivalent of NO⁺ to different biological molecules. N₂O₃ is formed primarily at neutral pH either from the NO/O₂ reaction or the NO/O₂ reaction when the flux of NO is higher than that of O₂⁻. Due to the rate laws of these and competing reactions, nitrosative stress occurs mainly in the presence of high localized fluxes of NO. Nitrosating intermediates have the greatest affinity for thiols such as glutathione (GSH) suggesting that they are a primary target under nitrosative stress conditions.

In several studies, the formation of S-nitrosothiol adducts with protein has been suggested as the important step in the inhibition of a variety of enzymes. For example, the S-nitrosothiol adduct stimulates ADP ribosylation of glyceraldehyde phosphate dehydrogenase. Additionally, S-nitrosation inhibits DNA alkyl transferase activity both *in vitro* and *in vivo* and results in the potentiation of the toxicity of alkylating agents such as chemotherapeutic agents. Proteins containing zinc finger motifs loose their structural integrity upon exposure to NO, resulting in inhibition of enzyme activity.

It is believed that the composition according to the invention reduces reactive oxygen species, thereby optimizing the redox state and possibly the pH value in plant cells. It is furthermore envisaged that the composition as used in accordance with the invention may be applied shortly prior to harvesting parts of a plant or the complete plant and/or selling the plants or parts of plants grown. This application will reduce oxidative and nitrosative stress and lead to a better appearance and health of the plants or parts thereof thereby improving their saleability and/or increasing their price. Furthermore, this measure may reduce the amount of artificial pesticides or fertilizers applied and lead to plants or parts thereof which are less burdened by potentially harmful compounds and/or to partly organic plants or parts thereof.

In a preferred embodiment, the plant is a polyploidic plant.

The term "polyploidy" denotes the presence of more than two homologous sets of chromosomes in the cells of a unicellular or multicellular organism.

Many organisms, in particular plants, are normally diploid, i. e. they have only two sets of chromosomes, one set inherited from each parent. Haploidy (the presence of only one set of chromosomes) may also occur as a normal stage in an organism's life.

Polyploidy occurs in particular in plants which are accordingly called "polyploidic plants", e. g. ferns and flowering plants, including both wild and cultivated species. Wheat, for example, after millennia of hybridization and modification by humans, has strains that are diploid, tetraploid with the common name of durum or macaroni wheat, and hexaploid with the common name of bread wheat. Many agriculturally important plants of the genus *Brassica* are also tetraploids. The occurrence of polyploidy is a mechanism of speciation and is known to have resulted in new species of plants, e. g. the plant Salsify (also known as "goatsbeard").

Polyploid plants can arise spontaneously in nature by several mechanisms, including meiotic or mitotic failures, and fusion of unreduced (2n) gametes. Both autopolyploids (eg. potato) and allopolyploids (eg. canola, wheat, cotton) can be found among both wild and domesticated plant species. Most polyploids display heterosis relative to their parental species, and may display novel variation or morphologies that may contribute to the processes of speciation and eco-niche exploitation. The mechanisms leading to novel variation in newly formed allopolyploids may include gene dosage effects (resulting from more numerous copies of genome content), the reunion of divergent gene regulatory hierarchies, chromosomal rearrangements, and epigenetic remodeling, all of which affect gene content and/or expression levels. Many of these rapid changes may contribute to reproductive isolation and speciation.

Polyploidy may also be artificially induced, e. g. by the application of the mitosis toxin colchicine.

Polyploid plants tend to be larger and better at flourishing in early succession habitats such as farm fields. In the breeding of crops, the tallest and best thriving plants are selected for. Thus, many crops (and agricultural weeds) may have unintentionally been bred to a higher level of ploidy.

Some crops are found in a variety of ploidy. Apples, tulips and lilies are commonly found as both diploid and as triploid. Daylilies (Hemerocallis) cultivars are available as either diploid or tetraploid. Kinnows can be tetraploid, diploid, or triploid.

Triploid crops are e. g. banana, apple, ginger, watermelon, citrus. Tetraploid crops are durum or macaroni wheat, maize, cotton, potato, cabbage, leek, tobacco, peanut, kinnow, pelargonium. Hexaploid crops are chrysanthemum, bread wheat, triticale, oat, kiwifruit. Octaploid crops are strawberry, dahlia, pansies, sugar cane.

In another preferred embodiment, the composition is administered in conjunction with a fertilizer, a pesticide and/or a herbicide.

In this and the following embodiments, if the composition as used in connection with the present invention comprises more than one compound as described above, said compounds may be applied to a plant concurrently or subsequently, depending on the purpose and the needs of the plant. The same holds true for the amount or concentration of additional ingredients of the composition. For example, the amount of fertilizer including at least one macronutrient, secondary plant nutrient and/or micronutrient will depend on the needs of specific plants. The amount of pesticide will depend on the degree of infestation of a plant with a pest.

The term "pesticide" denotes a substance or mixture of substances used to control a pest. It may be a chemical substance, biological agent (such as a virus or bacteria), antimicrobial, disinfectant or device used against any plant pest. Pests (and the respective agents used to control them) include algae (algicides) (algae may be a pest if they are interfering with the growth of other plants such as crops, vegetables and fruits, but not when they are grown on purpose such as by fermentation), insects (insecticides, further divided into these can be ovicides (substances that kill eggs), larvicides (substances that kill larvae) or adulticides (substances that kill adults)), plant pathogens, weeds (herbicides), molluscs (molluscicides), birds (avicides), mammals (e. g. rodenticides against rodents), nematodes (roundworms, nematicides), mites (miticides) and microbes (bactericides, fungicides (in case fungi are interfering with the growth of other plants, but not when they are grown as edible mushrooms), virucides) that compete with humans for food, destroy property, spread or are a vector for disease or cause a nuisance for humans. The composition of the invention is suggested to be able to reduce the amount of pesticides such as herbicides which are to be applied since the plants are generally more resistant to pests.

A systemic pesticide moves inside a plant following absorption by the plant. With insecticides and most fungicides, this movement is usually upward (through the xylem) and outward. Increased efficiency may be a result.

Common classes of pesticides include organochlorine compounds (such as DDT, an insecticide which is by now forbidden in most countries), organophosphates (insecticides such as sarin, tabun, soman, VX and carbamate insecticides), pyrethroids (mimicking the activity of the natural compound pyrethrum), neonicotinoids (insecticides) or biological insecticides (e. g. Bacillus thuringiensis or entomopathogenic fungi).

A herbicide is used to kill unwanted plants. Selective herbicides kill specific targets while leaving the desired crop relatively unharmed. Some of these act by interfering with the growth of the weed and are often synthetic mimetics of plant hormones. Herbicides used to clear waste ground, industrial sites, railways and railway embankments are non-selective and kill all plant material with which they come into contact. Some plants produce natural herbicides, such as the genus *Juglans* (walnuts).

Herbicides are widely used in agriculture and in landscape turf management. Herbicides can be grouped by activity, use, chemical family, mode of action, or type of vegetation controlled. Regarding their activity, herbicides are divided into contact and systemic herbicides. Contact herbicides destroy only the plant tissue in contact with the chemical. They are less effective on perennial plants, which are able to regrow from rhizhomes, roots or tubers. Systemic herbicides are translocated through the plant, either from foliar application down to the roots, or from soil application up to the leaves. They are capable of controlling perennial plants and may be slower acting but ultimately more effective than contact herbicides. Most herbicides are soil-applied and are sub-grouped into pre-plant incorporated herbicides, pre-emergent and post-emergent herbicides.

Herbicides have different modes of action on plants. Exemplary herbicides are ACCase (acetyl coenzyme A carboxylase) inhibitors that kill grasses by affecing cell membrane production in the meristems of the grass plant. The ACCases of grasses are sensitive to these herbicides, whereas the ACCases of dicot plants are not. Another organic herbicide (containing carbon as a primary molecular component) is D-limonene (citrus oil), a natural degreasing agent that strips the waxy skin or cuticle from weeds, causing dehydration and ultimately death. 2,4-D is a broadleaf herbicide in the phenoxy group used in turf and in no-till field crop production. Now mainly used in a blend with other herbicides that allow lower rates of herbicides to be used, it is the most widely used herbicide in the world. Aminopyralid is a broadleaf herbicide in the pyridine group, used to control broadleaf weeds on grassland, such as docks, thistles and nettles. Clopyralid is a broadleaf herbicide in the pyridine group, used mainly in turf, rangeland, and for control of noxious thistles. Dicamba is a post-emergent broad leaf herbicide with some soil activity, used on turf and field corn. Glufosinate ammonium is a broad-spectrum contact herbicide and is used to control weeds after the crop emerges. Fluroxypyr is a systemic, selective herbicide used for the control of broad-leaved weeds in small grain cereals, maize, pastures, range land and turf. In cereal growing it is used in the control of cleavers, *Galium aparine.* Other key broad-leaved weeds are also controlled. Imazapic is a selective herbicide for both the pre-and post-emergent control of some annual and perennial grasses and some broadleaf weeds. Imazapic kills plants by inhibiting the production of branched chain amino acids, which are necessary for protein synthesis and cell growth. Metolachlor is a pre-emergent herbicide widely used for control of annual grasses in corn and sorghum. Pendimethalin is a pre-emergent herbicide widely used to control annual grasses and some broadleaf weeds in a very wide range of crops, including corn, soybeans, wheat, cotton, many tree and vine crops, and many turfgrass species. Triclopyr is a systemic, foliar herbicide in the pyridine group. It is used to control broadleaf weeds while leaving grasses and conifers unaffected.

The amount of common fertilizers may also be reduced since the plants are able to more effectively exploit the nutrients provided in the fertilizer.

As described in detail above, fertilizers typically provide, in varying proportions, the three major plant (macro-) nutrients (nitrogen, phosphorus, potassium: N-P-K), the secondary plant nutrients (calcium, sulfur, magnesium) and sometimes trace elements (or micronutrients) with a role in plant nutrition: boron, chlorine, manganese, iron, zinc, copper, molybdenum and optionally selenium. Exemplary compounds containing secondary plant nutrients or micronutrients which may be applied in fertilizers are calcium citrate and magnesium citrate, calcium phosphate, iron sulfide, iron sulphate, potassium carbonate, cobalt carbonate.

Additionally, the composition to be used according to the present invention may comprise at least one of sugars, vitamins, macronutrients, secondary plant nutrients, micronutrients, attractants to pests and sulphur or selenium donors.

The above substances may be added to the composition according to the invention in an amount/concentration adapted to the plants to be treated. For vitamins the range of concentrations is well-known in the art and generally located between 0.1 µg/kg and 10 g/kg, preferably between 1 µg/kg (I+II) and 100 mg/kg (I+II), most preferably between 10 mg/kg (I+II) and 100 mg/kg (I+II). For macronutrients, secondary plant nutrients and micronutrients suitable concentrations are well-known in the art and will be adapted to those of commonly known fertilizers and to the plant to be treated..

Vitamins are well known in the art. The known definitions are equally applied in accordance with the present invention. Accordingly, a vitamin is an organic compound required as a nutrient in tiny amounts by an organism such as a plant. A compound is called a vitamin when it cannot be synthesized in sufficient quantities by an organism, and must be obtained from the diet. Thus, the term is conditional both on the circumstances and the particular organism. Plant vitamins are Vitamin A, B, C, D, E and K vitamins.

Micronutrients are nutrients needed for life in small quantities. There are about eight micronutrients essential to plant growth and health. These are manganese, boron, copper, iron, chlorine, cobalt, molybdenum, and zinc. Boron is believed to be involved in carbohydrate transport in plants; it also assists in metabolic regulation. Boron deficiency will often result in bud dieback. Chlorine is necessary for osmosis and ionic balance; it also plays a role in photosynthesis. Cobalt is essential to plant health. Cobalt is thought to be an important catalyst in nitrogen fixation. It may need to be added to some soils before seeding legumes. Copper is a component of some enzymes. Symptoms of copper deficiency include browning of leaf tips and chlorosis. Iron is essential for chlorophyll synthesis, which is why an iron deficiency results in chlorosis. Manganese activates some important enzymes involved in chlorophyll formation. Manganese deficient plants will develop chlorosis between the veins of its leaves. The availability of manganese is partially dependent on soil pH. Molybdenum is essential to plant health. Molybdenum is used by plants to reduce nitrates into usable forms. Some plants use it for nitrogen fixation, thus it may need to be added to some soils before seeding legumes. Zinc participates in chlorophyll formation, and also activates many enzymes. Symptoms of zinc deficiency include chlorosis and stunted growth.

Sulphur- or selenium donors serve to promote e.g. mitochondrial activity and/or glutathionperoxidase activity (with selenocysteine in the active centre of the enzyme). Exemplary sulphur- and selenium donors include as N-acetylmethionine, N-acetylselenomethionine, N-acetylcysteine, N-acetylselenocysteine, cysteine, cystin, enzymes containing sulphur and selenium-yeast and methionine.

The above compounds can be comprised in the composition used in accordance with the invention to further improve the effect of the at least one compound of formula (I) and optionally formula (II) and to provide the plant with further nutrients. The decision of when to add the above compounds to the composition used in accordance with the invention is taken by the skilled person and depends on the plant to be treated as well as on pests already or potentially present.

In the case of attractants to pests, the composition used in accordance with the invention and comprising said attractant will preferably be applied only to a part of a field to attract and concentrate potential pests in this area and to keep the remaining area free of said pests. In the treated area, a pesticide can be applied, e. g. concomitant to the composition used in accordance with the invention or even comprised in the composition according to the invention. In this embodiment, the application can thus lead to a reduction of costs for pesticides and to a decrease of losses due to pests. Attractants for pests are well-known in the art and differ depending on the pest to be battled.

The present invention also relates to a composition comprising the compound of formula (I) and at least one member selected from vitamins, macronutrients, secondary plant nutrients, micronutrients, sulphur- or selenium donors. In a preferred embodiment, the composition further comprises at least one acid, a salt or acetyl-coenzyme A as defined above, i. e. (i) α-ketoacids represented by formula (II) as defined above, (ii) hydroxy-dicarboxylic acids, and salts thereof; (iii) lactic acid and salts thereof; (iv) acetyl-coenzyme A; and (v) mixtures of two or more thereof.

The example illustrates the invention

### Example 1: Cyclamen under drought and insufficient fertilizer treated with new nutriment

### Materials and methods:

6 equally treated flowering cyclamen were bought from a market garden. They had been grown with N-P-K-fertilizer 15-5-25 with 2% Mg, which normally has to be given every two weeks. They need to be put into flat water with their roots, kept humid and grown under indirect light at ca. 18°C to stay in best condition. They don't like really wet conditions especially at the tuber.

During the experiment the cyclamen were kept under indirect light at ca. 18°C and watered with water/solutions at room temperature like given in table 1. Group I was given water, group II was given water containing 8g/l alpha-ketoglutaric arid and 200 mg/l 5-hydroxymethylfurfural.

**Table 1: Experimental scheme for watering cyclamen**

| Cyclamen | Group I (water) | Group II (8g/l AKG+ 200mg/l 5-HMF in water) |
|---|---|---|
| Day 1 | 50ml | 50ml |
| Day 2 | 50ml | 50ml |
| Day 3 | 50ml | 50ml |
| Day 5 | 50ml | 50ml |
| Day 6 | 100ml | 100ml |
| Day 13 | 100ml | 100ml |
| Day 16 | 50ml | 50ml |
| Day 22 | 50ml | 50ml |
| Day 24 | 50ml | 50ml |
| Day 31 | 100 ml | 100 ml |

### Results and discussion:

From day 1 to 6 all 6 cyclamen from group I and II looked very similar and well with 100% upright flower stalks. They got enough watering. Results are shown in Table 2. Upright in this experiment means all flower stalks being upright or maximum 30° different from the 90° upright angle

**Table 2: [%] of upright (90°+/-30°) flower stalks cyclamen**

| Cyclamen | [%] flower stalks upright (90°+/-30°) Group I (water) | [%] flower stalks upright (90°+/-30°) Group II (8g/l AKG+ 200mg/l 5-HMF in water) |
|---|---|---|
| Day 1 | 100 | 100 |
| Day 6 | 100 | 100 |
| Day 13 | 23 | 96 |
| Day 16 | 21 | 79 |
| Day 22 | 0 | 75 |
| Day 24 | 83 | 96 |
| Day 31 | 14 | 30 |
| Day 32 | 23 | 84 |

At day 13 after 7 days of drought differences became obvious. Group II was still looking very good with 96% of the flower stalks being upright. The drought hardly had an impact on the plants of Group II. On the other hand, most of the leaves and blooms of Group I were hanging down, only 23% of the flower stalks were still upright.

After giving water/solutions again on day 13 and 16 group II remained still looking good with 79% of the flower stalks being upright on day 16. The cyclamen of group I showed 21% upright flower stalks only. Alpha-ketoglutaric acid and 5-Hydroxymethylfurfural were working as good nutriments allowing the cyclamen to withstand extreme drought and less and less fertilization from the soil, because no additional fertilizer was given after two weeks as recommended for cyclamen.

After another drought of 6 days the differences became extreme on day 22. Group II was still looking good with 75% of the flower stalks being upright. All leaves, flower stalks and blooms of group I were hanging down.

After watering on day 22 and 24 most of the cyclamen even of group I recovered reaching 83% upright flower stalks again. Group II had 96% upright flower stalks and looked fresher, but group I seemed to get used to the drought after this second period, too.

The differences became more obvious again after the third period with 7 days of drought. This time both groups were hit hard with only 14% upright flower stalks in group I and 30% upright flower stalks in group II on day 31. The difference became more significant the day after. The watering with nutriments (alpha-ketoglutaric acid and 5-hydroxymethylfurfural) on day 31 allowed most of the flower stalks of group II to recover (84% upright), whereas only 23% of the flower stalks of group I were upright.

### Summary:

The mixture of alphaketoglutaric acid and 5-Hydroxymethylfurfural is able to prevent cyclamen from negative impacts of drought and insufficient common fertilizer (N-P-K). Cyclamen after several periods of drought treated in between with water containing alpha-ketoglutaric acid and 5-Hydroxymethylfurfural showed less impact of the drought with more flower stalks still being upright and better recovering rate after watering compared to cyclamen watered with simple water.

## Claims

1. Use of a composition comprising at least one compound of formula (I) 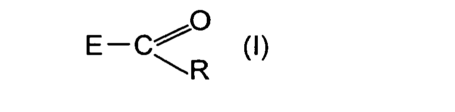 wherein
either
R is selected from hydrogen, and C₁-C₄alkyl; and
E is an electron rich group with at least one double bond in α-position to the carbonyl carbon atom of formula (I) and is selected from 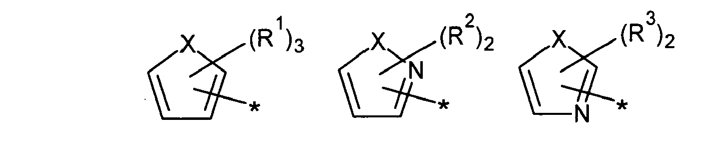 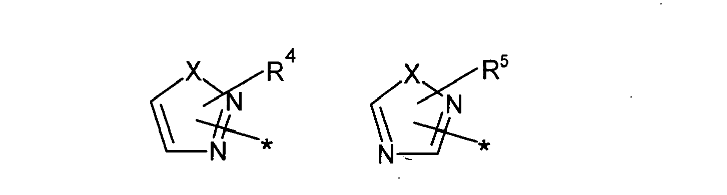 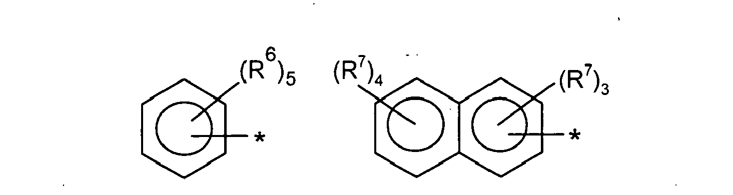 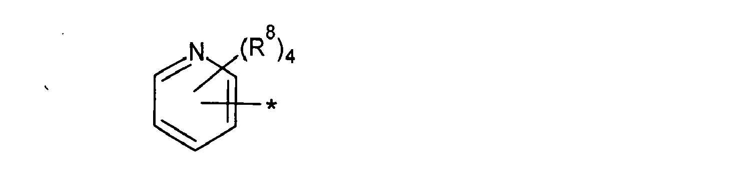 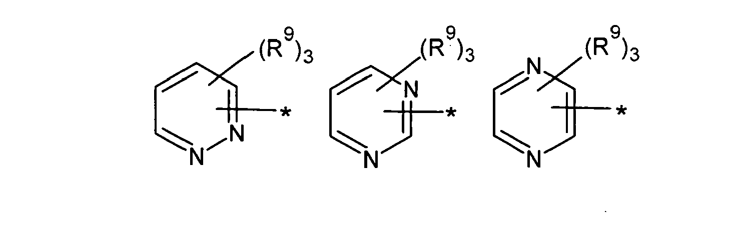 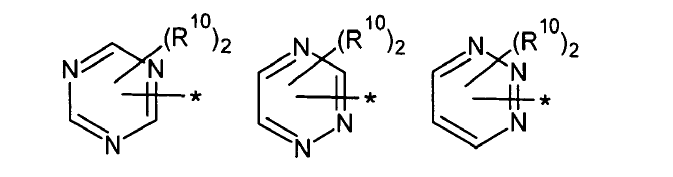 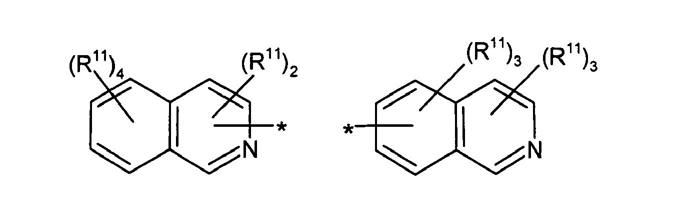 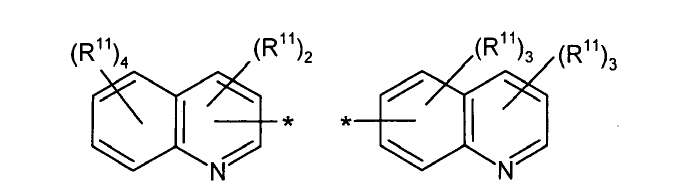 and 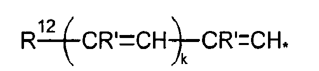 wherein
* denotes the binding site of the carbonyl carbon atom of formula (I);
k is an integer of 0 to 6;
each R' is independently selected from H, OH, CH₃ and CH₂OH;
X is independently selected from O, S and NH;
each of R¹, R² R³, R⁴, R⁵, R⁶, R⁷, R⁸, R⁹, R¹⁰ and R¹¹ is independently selected from hydrogen; C₁-C₄alkyl optionally substituted with one or more substituents independently selected from OH, COOH, CHO; C₁-C₄alkoxy; OH; SH; SeH; halogen;
and
R¹² is selected from hydrogen, C₁-C₂₂alkyl, OH, SH, SeH, C₁-C₂₂alkoxy, C₃-C₆cycloalkyl and C₃-C₆cycloalkenyl, wherein each alkyl, alkoxy, cycloalkyl and cycloalkenyl group may optionally be substituted with one or more substituents selected from -CH₃, -CH₂OH, OH and COOH;
or
E together with R forms a ring where the carbonyl carbon atom of formula (I) is an integral part of the ring and where there are at least two conjugated double bonds in α-position to the carbonyl carbon atom, resulting in compounds selected from those of the following structures (Ia), (Ib), (Ic), (Id) and (Ie): 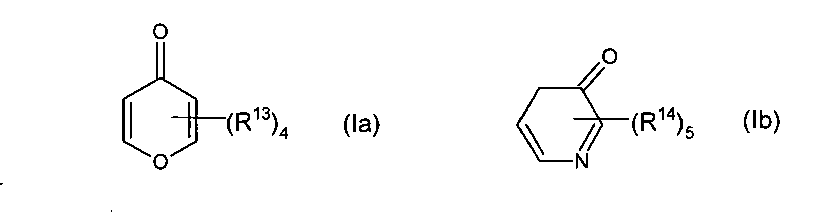 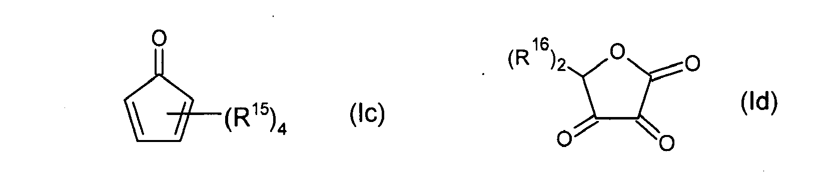 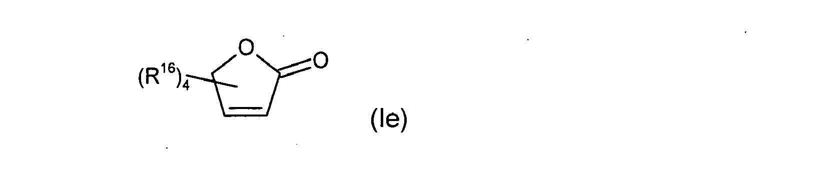 wherein
each R¹³, R¹⁴, R¹⁵ and R¹⁶ is independently selected from hydrogen; OH; SH; SeH; C₁-C₁₂alkyl optionally substituted with one or more substituents selected from OH, SH and SeH; and C₁-C₁₂alkoxy optionally substituted with one or more substituents selected from OH, SH, and SeH;
as a plant nutriment.

2. The use of claim 1, wherein E is an electron rich group with at least two conjugated double bonds in α-position to the carbonyl carbon atom of formula (I).

3. The use of claim 1 or 2, wherein the compound of formula (I) is selected from 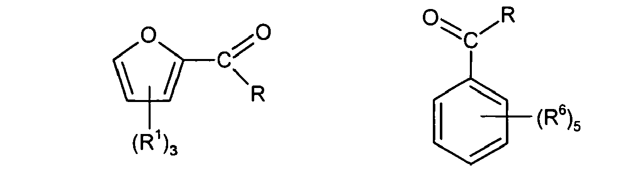 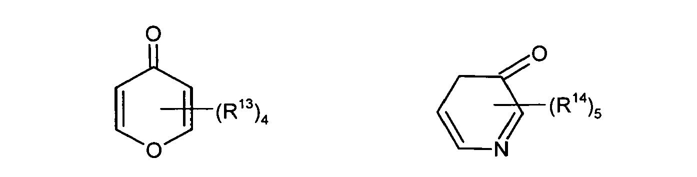 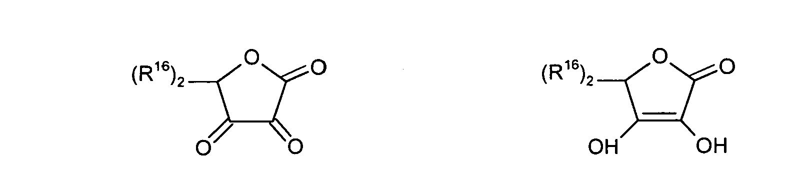 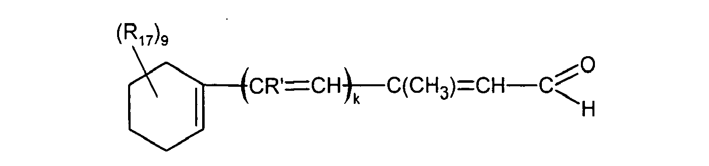 wherein R, R¹, R⁶, R¹³, R¹⁴ and R¹⁶ are as defined in claim 1,
k is 0 or an integer from 1 to 3,
each R¹⁷ is independently selected from H anc CH₃ and each R' is independently selected from H and CH₃.

4. The use of claim 3, wherein
R is selected from hydrogen, methyl, and ethyl,
each R¹ is independently selected from hydrogen, OH, methyl, ethyl, hydroxymethyl, and hydroxyethyl,
each R⁶ is independently selected from hydrogen, OH, methoxy, and ethoxy, each R¹³ is independently selected from hydrogen, OH, methyl, and ethyl, each R¹⁴ is independently selected from hydrogen, methyl, ethyl, hydroxymethyl, and hydroxyethyl,
and each R¹⁶ is independently selected from hydrogen, hydroxymethyl, hydroxyethyl, and dihydroxyethyl.

5. The use of any one of claims 1 to 4, wherein the compound of formula (I) is 5-hydroxymethylfurfural, maltol, vanillin, dehydroascorbic acid, cis- or trans-retinal or a mixture of two or more thereof.

6. The use of claim 5, wherein the compound of formula (I) is 5-hydroxymethyl-furfural.

7. The use of any one of claims 1 to 6, wherein the composition further comprises at least one acid and/or salt selected from:
(i) α-ketoacids represented by the following formula (II) 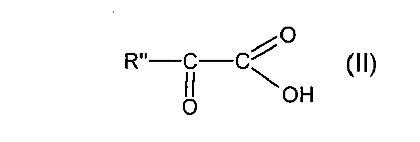 wherein R" is selected from hydrogen, C₁-C₈ alkyl, -(CH₂)ₓ-COOH,
and x is an integer from 1 to 6, and salts thereof;
(ii) hydroxy-dicarboxylic acids, and salts thereof;
(iii) lactic acid and salts thereof;
(iv) acetyl-coenzyme A; and
(v) mixtures of two or more thereof.

8. The use of claim 7, wherein the acid or salt is selected from α-ketoglutaric acid,
α -ketopropionic acid, oxaloacetic acid, L- and D-malic acid and salts of these acids.

9. The use of any one of claims 1 to 8, wherein said nutriment is for improving resistance to pests and/or to drought and/or excess of water/floods and/or hypoxia or anoxia and/or for enhancing growth.

10. The use of any one of claims 1 to 9, wherein said compound of formula (I) reduces oxidative and/or nitrosative stress in said plant.

11. The use of any one of claims 1 to 10, wherein said plant is a polyploidic plant.

12. The use of any one of claims 1 to 11, wherein said composition is administered in conjunction with a fertilizer, a pesticide and/or a herbicide.

13. The use of any one of claims 1 to 12, wherein the composition further comprises at least one compound selected from the group consisting of vitamins, macronutrients, secondary plant nutrients, micronutrients and sulphur- or selenium donors.

14. A composition comprising the compound of formula (I) as defined in any one of claims 1 to 6 and at least one member selected from vitamins, macronutrients, secondary plant nutrients, micronutrients, sulphur- or selenium donors.

15. The composition of claim 14, further comprising an acid or salt or acetyl-coenzyme A as defined in claim 7 or 8.
